# EUROPÄISCHE PATENTSCHRIFT

(11) **EP 0 759 378 B1**
(45) Veröffentlichungstag und Bekanntmachung des Hinweises auf die Patenterteilung: **25.11.1998**
(21) Anmeldenummer: 96110641.6
(22) Anmeldetag: 02.07.1996
(51) Int. Cl.: B60R 11/02, B60K 37/06

(54) **Anordnung von mehreren Bedienteilen**
Arrangement of several control units
Agencement de plusieurs modules de commande

(30) Priorität: 05.08.1995 DE 19528868
(43) Veröffentlichungstag der Anmeldung: 26.02.1997
(73) Patentinhaber: Preh-Werke GmbH & Co. KG, 97616 Bad Neustadt (DE)
(72) Erfinder: Storath, Joachim, 97616 Bad Neustadt (DE); Voll, Walter, 97657 Sandberg (DE); Bauer, Karl-Heinz, 97616 Bad Neustadt (DE)
(74) Vertreter: Pfeiffer, Helmut, Dipl.-Ing.

(56) Entgegenhaltungen:
- US-A- 4 867 398

## Beschreibung

Die Erfindung betrifft eine Anordnung von mehreren Bedienteilen auf einem Armaturenbrett eines Kraftfahrzeuges, die durch Blenden, die nach der Befestigung der Bedienteile aufgesetzt werden, eingerahmt und verblendet werden.

Gegenüber den mit größter Genauigkeit gefertigten Bedienteilen weist das Armaturenbrett größere Fertigungstoleranzen auf und somit ist der Abstand zwischen den einzelnen, an diesem befestigten Bauteilen unterschiedlich groß, so daß die Blenden, die nach der Befestigung der Bedienteile aufgesetzt werden, entweder gegeneinander klemmen oder einen ungleichen Abstand zueinander aufweisen, letzteres verursacht ein unschönes Aussehen.

Als Maßnahmen hiergegen ist bekannt, die Befestigung der Bedienteile mittels Lehren innerhalb von mit größerem Einbauspiel ausgeführten Schraubenlöchern durchzuführen.

Die Befestigung mittels Lehren ist in der Montage sehr aufwendig und beim Auswechseln von Bedienteilen in Werkstätten nicht durchführbar.

Hiervon ausgehend liegt der Erfindung die Aufgabe zugrunde, Maßnahmen aufzufinden, mit denen eine vorteilhafte Montage ohne Lehren bei gleich großem Abstand der aufgesetzten Blenden der Bedienteile erreicht wird.

Diese Aufgabe ist bei der Anordnung nach dem Oberbegriff des Anspruchs 1 dadurch gelöst, daß die Bedienteile gegenüber festliegenden Befestigungsaugen federnd gehalten sind und der Abstand zwischen den einzelnen Bedienteilen und einer Einrahmung innerhalb des Armaturenbrettes durch an den Blenden angeordnete Abstandshalter festgelegt sind.

Vorteilhafte Weiterbildungen dieser Anordnung sind in den Unteransprüchen angegeben.

Ein Ausführungsbeispiel der erfinderischen Anordnung ist in der Zeichnung dargestellt und wird nachfolgend beschrieben.

Diese zeigt:
**Fig. 1**
   ein Armaturenbrett mit mehreren montierten Bedienteilen und aufgesetzten Blenden;
**Fig. 2**
   ein Bedienteil als Einzelteil.

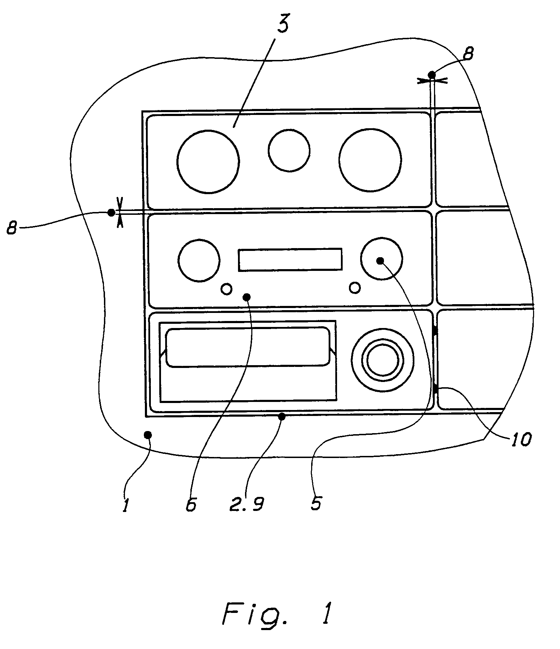

Fig. 1 zeigt ein Armaturenbrett 1 eines Kraftfahrzeuges mit einem Durchbruch 2, in dem mehrere Bedienteile 3 angeordnet sind. Bei diesen handelt es sich um solche, die z. B. eine Lüftungs-Klimaanlage einstellen, ein Autoradio betätigen usw.

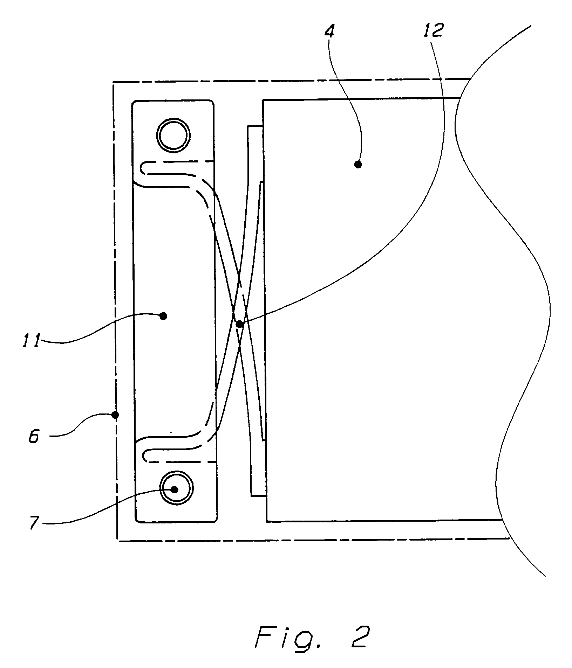

Die Bedienteile 3 bestehen aus einem Bedienteilkörper 4 (Fig. 2) mit Funktionsteilen 5 wie Drehknöpfe, Drucktasten, Displays. Die Bedienkörper 4 sind einzeln an entsprechende (nicht dargestellte) Befestigungsflächen des Armaturenbretts 1 befestigt, d. h. hier verschraubt.

Nach der Montage aller Bedienteile 3 werden diese durch aufgesetzte Blenden 6 eingerahmt und verblendet.

Erfindungsgemäß ist nun vorgesehen, daß die Bedienteile 3 gegenüber festliegenden Befestigungsaugen 7 federnd gehalten sind und der Abstand 8 zwischen den einzelnen Bedienteilen 3 und einer Einrahmung 9 innerhalb des Armaturenbrettes 1 durch an den Blenden 6 angeordneten Abstandshalter 10 festgelegt sind, wie aus Fig. 2 ersichtlich, in der ein Bedienteilkörper 4 als Einzelteil dargestellt ist, wobei eine Strichpunktlinie die äußeren Kanten der Blende 6 darstellen soll, d. h. die Blende 6 verdeckt die Befestigungsaugen 7.

Es ist vorteilhaft, daß die Befestigungsaugen 7 paarweise an einer Befestigungsleiste 11 angeordnet sind, die über wenigstens ein Federteil 12 mit dem Bedienteilkörper 4 verbunden ist.

Es kann vorgesehen sein, daß Bedienteilkörper 4, Federteil 12 und Befestigungsleisten 11 aus einem elastischen Kunststoff einstückig gespritzt sind oder alternativ, daß Bedienteilkörper 4 und Befestigungsleisten 11 über aus Metall bestehende Federteile 12 verbunden sind.

Letzteres dadurch, daß Bedienteilkörper 4 und Befestigungsleiste 11 aus mit den Federteilen 12 verspritztem Kunststoff bestehen oder daß Bedienteilkörper 4 und Befestigungsleisten 11 mit den Federteilen 12 verschraubt, vernietet oder verschweißt verbunden sind.

Für eine leichte Montage der Blenden 6 ist vorgesehen, daß Bedienteilkörper 4 und Blende 6 Verklippszonen bzw. -arme aufweisen (nicht extra dargesellt), die nach der Montage verrasten.

Die erfindungsgemäße Anordnung ermöglicht es, daß mehrere Bedienteilkörper 4 durch nur eine gemeinsame Blende 6 eingerahmt und verblendet werden, mit den Vorteilen einer Bauteilereduzierung und einer Montageerleichterung.

## Patentansprüche

1. Anordnung von mehreren Bedienteilen auf einem Armaturenbrett eines Kraftfahrzeuges, die durch Blenden, die nach der Befestigung der Bedienteile aufgesetzt werden, eingerahmt und verblendet werden, **dadurch gekennzeichnet**, daß die Bedienteile (3) gegenüber festliegenden Befestigungsaugen (7) federnd gehalten sind und der Abstand (8) zwischen den einzelnen Bedienteilen (3) und einer Einrahmung (9) innerhalb des Armaturenbrettes (1) durch an den Blenden (6) angeordnete Abstandshalter (10) festgelegt sind.

2. Anordnung nach Anspruch 1, **dadurch gekennzeichnet**, daß die Befestigungsaugen (7) paarweise an einer Befestigungsleiste (11) angeordnet sind, die über wenigstens ein Federteil (12) mit dem Bedienteilkörper (4) verbunden ist.

3. Anordnung nach Anspruch 2, **dadurch gekennzeichnet**, daß Bedienteilkörper (4), Federteil (12) und Befestigungsleisten (11) aus einem elastischen Kunststoff einstückig gespritzt sind.

4. Anordnung nach Anspruch 2, **dadurch gekennzeichnet**, daß Bedienteilkörper (4) und Befestigungsleisten (11) über aus Metall bestehende Federteile (12) verbunden sind.

5. Anordnung nach Anspruch 4, **dadurch gekennzeichnet**, daß Bedienteilkörper (4) und Befestigungsleiste (11) aus mit den Federteilen (12) verspritztem Kunststoff bestehen.

6. Anordnung nach Anspruch 4, **dadurch gekennzeichnet**, daß Bedienteilkörper (4) und Befestigungsleisten (11) mit den Federteilen (12) verschraubt, vernietet oder verschweißt verbunden sind.

7. Anordnung nach einem der vorstehenden Ansprüche, **dadurch gekennzeichnet**, daß Bedienteilkörper (4) und Blende (6) Verklippszonen bzw. -arme aufweisen.

8. Anordnung nach einem der Ansprüche 1 bis 6, **dadurch gekennzeichnet**, daß mehrere Bedienteilkörper (4) durch nur eine gemeinsame Blende (6) eingerahmt/verblendet sind.

## Claims

1. Arrangement of a plurality of control units on a dashboard of a motor vehicle, which control units are framed and covered by cover plates which are put on after the control units have been fastened, characterised in that the control units (3) are held in a spring-mounted manner with respect to fixed fastening eyes (7), and the distance (8) between the individual control units (3) and a frame (9) inside the dashboard (1) is fixed by spacers (10) arranged on the cover plates (6).

2. Arrangement according to claim 1, characterised in that the fastening eyes (7) are arranged in pairs on a fastening strip (11), which is connected to the control-unit body (4) by way of at least one spring portion (12).

3. Arrangement according to claim 2, characterised in that the control-unit body (4), spring portion (12) and fastening strips (11) are injection-moulded in one piece from an elastic synthetic material.

4. Arrangement according to claim 2, characterised in that the control-unit bodies (4) and fastening strips (11) are connected by way of spring portions (12) which consist of metal.

5. Arrangement according to claim 4, characterised in that the control-unit body (4) and fastening strip (11) consist of a synthetic material which is injection-moulded with the spring portions (12).

6. Arrangement according to claim 4, characterised in that the control-unit bodies (4) and fastening strips (11) are connected to the spring portions (12) by screwing, riveting or welding.

7. Arrangement according to one of the preceding claims, characterised in that the control-unit body (4) and cover plate (6) have clip zones or arms.

8. Arrangement according to one of the claims 1 to 6, characterised in that a plurality of control-unit bodies (4) are framed/covered by only one common cover plate (6).

## Revendications

1. Agencement de plusieurs modules de commande sur un tableau de bord d'un véhicule automobile, les modules étant enchâssés et masqués par des panneaux rapportés après la fixation desdits modules de commande, caractérisé par le fait que les modules de commande (3) sont retenus élastiquement par rapport à des oeillets stationnaires de fixation (7) et la distance (8), entre les modules de commande individuels (3) et une structure d'encadrement (9), à l'intérieur du tableau de bord (1), est fermement établie par des organes d'espacement (10) disposés sur les panneaux (6).

2. Agencement selon la revendication 1, caractérisé par le fait que les oeillets de fixation (7) sont placés, par paires, sur une barrette de fixation (11) reliée au corps (4) d'un module de commande par l'intermédiaire d'au moins une pièce élastique (12).

3. Agencement selon la revendication 2, caractérisé par le fait que le corps (4) du module de commande, la pièce élastique (12) et les barrettes de fixation (11) sont venus d'injection d'un seul tenant en une matière plastique élastique.

4. Agencement selon la revendication 2, caractérisé par le fait que le corps (4) du module de commande et les barrettes de fixation (11) sont solidarisés par des pièces élastiques (12) constituées d'un métal.

5. Agencement selon la revendication 4, caractérisé par le fait que le corps (4) du module de commande et la barrette de fixation (11) consistent en une matière plastique injectée conjointement aux pièces élastiques (12).

6. Agencement selon la revendication 4, caractérisé par le fait que le corps (4) du module de commande et les barrettes de fixation (11) sont reliés aux pièces élastiques (12) par vissage, rivetage ou soudage.

7. Agencement selon l'une des revendications précédentes, caractérisé par le fait que le corps (4) du module de commande et le panneau (6) sont pourvus, respectivement de zones ou bras à déclic.

8. Agencement selon l'une des revendications 1 à 6, caractérisé par le fait que plusieurs corps (4) de modules de commande sont enchâssés/masqués à l'aide d'un unique panneau (6) commun.
